# EUROPEAN PATENT SPECIFICATION

(11) **EP 2 983 952 B1**
(45) Date of publication and mention of the grant of the patent: **02.10.2019**
(21) Application number: 14724940.3
(22) Date of filing: 14.04.2014
(51) Int. Cl.: B60S 1/38

(54) **WINDSCREEN WIPER DEVICE**
SCHEIBENWISCHERVORRICHTUNG
DISPOSITIF ESSUIE-GLACE

(30) Priority: 12.04.2013 US 201361811566 P
(43) Date of publication of application: 17.02.2016
(73) Proprietor: Federal-Mogul Corporation, Southfield, MI 48033 (US)
(72) Inventor: OSLIZLO, Michael, Commerce Twp, MI 48382 (US); JANKOWSKI, Danielle, Dearborn, MI 48128 (US)
(74) Representative: Hooiveld, Arjen Jan Winfried
(86) International application number: PCT/US2014/033986
(87) International publication number: WO 2014/169271

(56) References cited:
- EP-A2- 1 106 455
- WO-A1-01/92073
- DE-A1-102009 014 313
- DE-A1-102011 004 628
- KR-A- 20120 078 268

## Description

### CROSS-REFERENCE TO RELATED APPLICATION

This application claims the benefit of application Ser. No. 61/811,566, which was filed on April 12, 2013.

### BACKGROUND OF THE INVENTION

### 1. Field of the Invention

The present invention is related, generally, to beam style wiper blades and more particularly to beam style wiper blades with one or more flexors and a spoiler.

### 2. Related Art

Beam-style wiper blades are becoming increasingly common increasingly in the wiper blade industry. Typical beam-style wiper blade assemblies include a longitudinally extending wiper blade for sealing against a windshield, a carrier element which operably supports the wiper blade and a connecting device for joining the wiper blade assembly with an oscillating wiper arm of a vehicle. Some wiper blade assemblies additionally include a spoiler for applying a downforce to bias the wiper blade against the windshield of the vehicle when the vehicle is travelling at speed to improve the seal established between the wiping element and the windshield and ensure proper performance of the wiper blade assembly.

Document EP 1 106 455 A2 discloses a windscreen wiper device according to the preamble of claims 1 and 13.

### SUMMARY OF THE INVENTION AND ADVANTAGES

According to an aspect of the present invention, a windscreen wiper device is provided including a longitudinally extending wiper blade of a flexible material for sealing against a windshield of a vehicle. The wiper device further includes an elastic, elongated carrier that is self-biased into a pre-curved shape and which extends longitudinally between opposite ends. The carrier operably supports and biases the wiper blade into a pre-curved configuration. A connecting device is secured to the carrier for attachment to an oscillating wiper arm. A pair of subspoilers, which are constructed as separate pieces from one another and from the wiper blade, are arranged on longitudinally opposite sides of the connecting device, and each of the subspoilers is joined with the carrier along less than a full longitudinal length of the respective subspoiler with an adhesive, wherein each of said subspoilers is joined with said carrier in at least two regions which are spaced apart by a non-adhesive region. This may be advantageous from an operational perspective by allowing for improved flexing and unflexing of the windscreen wiper device as it oscillates back and forth on a curved windshield during operation of a vehicle's wiping system.

According to another aspect of the present invention, each of the subspoilers is joined with the carrier in at least three discrete and spaced apart adhesive regions which are spaced apart by at least two non-adhesive regions.

According to yet another aspect of the present invention, a pair of end caps are joined to opposite longitudinal ends of the carrier and are longitudinally spaced from the connecting device.

According to still another aspect of the present invention, each of the subspoilers substantially spans the space between the connecting device and one of the end caps.

According to a further aspect of the present invention, the adhesive joining the subspoilers is a glue.

According to yet a further aspect of the present invention, each of the subspoilers has a base surface and a pair of claws which engage around opposite lateral sides of the carrier and are adhesively joined to the carrier.

According to still a further aspect of the present invention, the base surface is adhesively joined to at least one of the wiper blade and the carrier.

Another aspect of the present invention provides for a method of making a windscreen wiper device. The method includes the step of preparing a wiper blade of a flexible material for sealing against a windshield to be cleaned. The method proceeds with the step of supporting the wiper blade with an elastic elongated carrier that extends longitudinally and is self-biased into a pre-curved shape. The method continues with the step of engaging a connecting device, which is configured for connection with a wiper arm, with the carrier. The method proceeds with the step of adhesively joining a pair of subspoilers, which are constructed as separate pieces from one another and from the wiper blade, with the carrier on opposite longitudinal sides of the connecting device with an adhesive that is applied along less than a full longitudinal length of each respective subspoiler, wherein the joining step includes joining each subspoiler to the carrier in at least two adhesive regions which are spaced apart from one another by a non-adhesive region.

According to another aspect of the present invention, the joining step includes joining each subspoiler to the carrier in at least three discrete and spaced apart adhesive regions which are spaced apart from one another by non-adhesive regions.

Still a further aspect of the present invention provides for a windscreen wiper device including a longitudinally extending wiper blade of a flexible material for sealing against a windshield of a vehicle. The wiper device further includes an elastic, elongated carrier that is self-biased into a pre-curved shape and which extends longitudinally between opposite ends. The carrier operably supports and biases the wiper blade into a pre-curved configuration. End caps are engaged with the opposite ends of the carrier, and a connecting device is secured to the carrier for attachment to an oscillating wiper arm. A pair of subspoilers, which are constructed as separate pieces from one another and from the wiper blade, are arranged on longitudinally opposite sides of the connecting device. Each of the subspoilers is bonded with the carrier along less than a full longitudinal length of the respective subspoiler, is bonded with the connecting device or is bonded with one of the end caps, wherein each of said subspoilers is joined with said carrier in at least two adhesive regions which are spaced apart by a non-adhesive region.

### BRIEF DESCRIPTION OF THE DRAWINGS

These and other features and advantages of the present invention will be readily appreciated, as the same becomes better understood by reference to the following detailed description when considered in connection with the accompanying drawings wherein:
Figure 1 is a perspective and elevation view of a first exemplary embodiment of a windscreen wiper device;
Figure 2 is a cross-sectional view taken along line 2-2 of the windscreen wiper device of Figure 1;
Figure 3 is a top elevation view of an exemplary carrier from the windscreen wiper device of Figure 1;
Figure 4 is a cross-sectional view taken along line 4-4 of the windscreen wiper device of Figure 1;
Figure 5 is a cross-sectional view taken along line 5-5 of the windscreen wiper device of Figure 1; and
Figure 6 is a cross-section view of a second exemplary embodiment of a windscreen wiper device.

### DESCRIPTION OF THE ENABLING EMBODIMENT

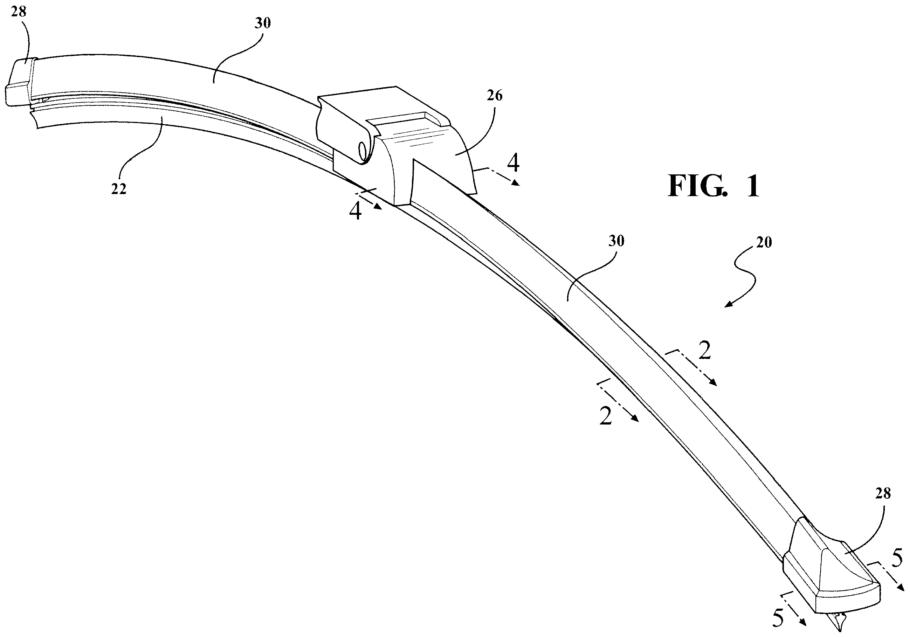

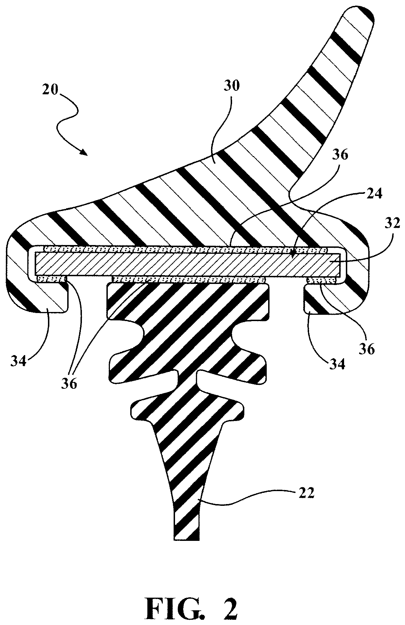

Referring to the Figures, wherein like numerals indicate corresponding parts throughout the several views, a first exemplary embodiment of a wiper blade assembly 20, or a windscreen wiper device, is generally shown in Figures 1 and 2. The windscreen wiper device has a wiper blade **22** (also known as a wiper strip or wiping element) which is made of a flexible material, such as a soft plastic or rubber. In use, the wiper blade **22** seals against the windshield of a vehicle to establish a seal therebetween for driving rain, snow, ice or other elements away from the windshield. The wiper blade assembly **20** additionally includes an elastic, elongated and spring-like carrier **24** which is self-biased into a pre-curved shape and which extends longitudinally between opposite ends. The carrier **24** operably supports the wiper blade **22** and is biased into a curved shape when in a resting condition. The carrier **24** is preferably made of metal, such as spring steel.

A connecting device **26** is secured to the carrier **24** at approximately a longitudinal mid-point of the carrier **24** for attachment to an oscillating wiper arm (not shown). The connecting device **26** could be configured for attachment to a range of different types of oscillating wiper arms including, for example, hook-style wiper arms, push button-style wiper arms, side pin-style wiper arms, etc.

A pair of end caps **28** are positioned at and joined with opposite longitudinal ends of the carrier **24.** The wiper blade assembly **20** further includes a pair of subspoilers **30** which are constructed from separate pieces from one another and from the wiper blade **22** and are arranged on longitudinally opposite sides of the connecting device **26.** More particularly, as shown in Figure 1, the subspoilers **30** extend substantially from opposite sides of the connecting device **26** to the respective end caps **28** at the longitudinal ends of the carrier **24**. The subspoilers **30** are each provided with an aerodynamic shape to impart a downforce on the wiper blade **22** to improve the seal between the wiper blade **22** and the windshield during operation of the wiper blade assembly **20**. Each of the subspoilers **30** is made of a resiliently flexible material for bending with the carrier **24** element into the precurved shape and for bending and straightening during use as the wiper blade assembly **20** travels along a curved windshield. The subspoilers **30** are preferably made of a natural or synthetic rubber or of a polymeric material.

Referring now to Figure 2, the carrier **24** of the first exemplary embodiment is a single strip **32** of metal which is adhesively joined or glued with a generally flat top surface of the wiper blade **22.** As shown, the single strip **32** carrier **24** extends outwardly on opposite lateral sides of the wiper blade **22**. When viewed in cross-section, the subspoiler **30** includes opposing claws **34** which engage around opposite lateral edges of the carrier **24**. The base surface of each subspoiler **30** is bonded to the carrier **24** along its lateral width between the claws **34** to establish a permanent connection between these components, which may provide increased resistance to unintentional detachment of the subspoiler **30**. Specifically, in the exemplary embodiment, the bonding agent between the subspoiler **30** and the carrier **24** is an adhesive **36**. However, it should be appreciated that the adhesive **36** between the subspoiler **30** and the carrier **24** could be a different kind of bonding agent other than adhesives including, for example, ultrasonic welding, laser welding, fusing, melting, etc.

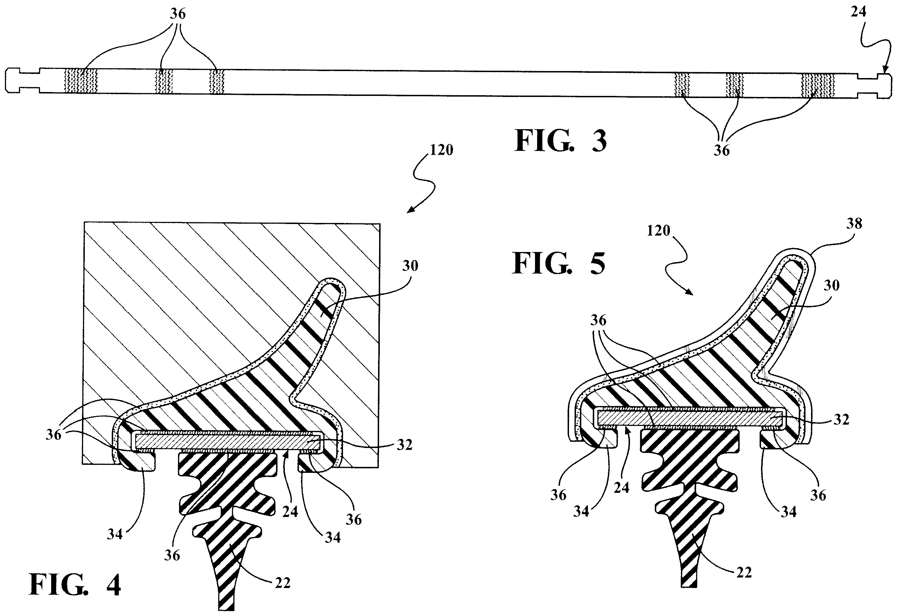

Referring now to Figures 1 and 3, the carrier **24** of the first exemplary embodiment is generally shown. The carrier **24** includes a plurality of spaced apart and discrete adhesive **36** regions for adhesively joining the subspoiler **30** with the carrier **24.** Specifically, in the exemplary embodiment, the carrier **24** includes three discrete adhesive **36** regions for joining the carrier **24** with one of the subspoilers **30** and three discrete adhesive **36** regions for joining the carrier **24** with the other subspoiler **30.** As such, less than the full longitudinal length of each subspoiler **30** is adhesively joined with the carrier **24.** The adhesive **36** could be any suitable adhesive **36** such as, for example, a glue or a double-sided tape. It should be appreciated that the adhesive **36** regions could alternately or additionally be applied to the subspoilers **30.**

Referring now to Figure 4, each of the subspoilers **30** of the first exemplary embodiment is also joined to the connecting device **26** with an adhesive **36** to restrict detachment therefrom. As shown, in this embodiment the adhesive **36** is applied to substantially the entire surface of contact between the subspoiler **30** and the connecting device **26.** Figure 5 also shows that in the first exemplary embodiment, each of the subspoilers **30** is joined to an end cap **28** with an adhesive **36** to resist detachment therefrom.

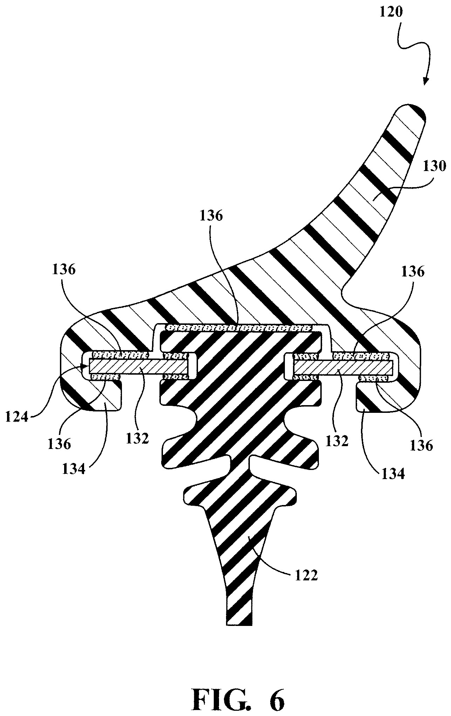

Referring now to Figure 6 wherein like numerals, separated by a factor of, indicate corresponding parts with the above-described embodiment, a second exemplary embodiment of the wiper blade assembly **120** is generally shown. In this exemplary embodiment, the carrier **124** includes a pair of separately constructed metal strips **132** which are seated in oppositely facing grooves on the wiper blade **122.** As such, the metal strips **132** are spaced laterally from one another and are joined together at adjacent ends by the end caps **128** (not shown in this Figure). As shown, the subspoiler **130** is joined with the two metal strips **132** of the carrier **124** with an adhesive **136**, which is present both between the base surface of the subspoiler **130** and the metal strips **132** and also between the claws **134** and the metal strips **132**. Additionally, in this exemplary embodiment, an adhesive **136** joins the subspoiler **130** with an upper surface of the wiper blade **122**.

Another aspect of the present invention provides for a method of making a windscreen wiper device. The exemplary method includes the step of preparing a wiper blade **22** of a flexible material for sealing against a windshield to be cleaned. The exemplary method proceeds with the step of supporting the wiper blade **22** with an elastic, elongated carrier **24** that is self-biased into a pre-curved shape and which extends longitudinally between opposite ends with the wiper blade **22**. The exemplary method continues with the step of engaging a connecting device **26**, which is configured for connection with a wiper arm, with the carrier **24**. The exemplary method proceeds with the step of adhesively joining a pair of subspoilers **30**, which are constructed as separate pieces from one another and from the wiper blade **22**, with the carrier **24** on opposite longitudinal sides of the connecting device **26** with an adhesive **36** that is applied along less than a full length of each respective subspoiler **30.** The adhesive **36** may be applied in two or more discrete and spaced apart adhesive **36** regions. The carrier **24** may include one or two metal strips **32.**

Obviously, many modifications and variations of the present invention are possible in light of the above teachings and may be practiced otherwise than as specifically described while within the scope of the appended claims.

## Claims

1. A windscreen wiper device, comprising:
a longitudinally extending wiper blade (22) of a flexible material for sealing against a windshield of a vehicle;
an elastic, elongated carrier (24) that is self-biased into a pre-curved shape and which extends longitudinally between opposite ends, said carrier operably supporting and biasing said wiper blade into a pre-curved configuration;
a connecting device (26) secured to said carrier for attachment to an oscillating wiper arm;
a pair of subspoilers (30) constructed as separate pieces from one another and from said wiper blade and arranged on longitudinally opposite sides of said connecting device; and
each of said subspoilers being joined with said carrier along less than a full longitudinal length of the respective subspoiler with an adhesive (36), the wiper device being **characterised in that** each of said subspoilers is joined with said carrier in at least two adhesive regions which are spaced apart by a non-adhesive region.

2. The windscreen wiper device as set forth in claim 1, wherein each of said subspoilers is joined with said carrier in at least three discrete and spaced apart adhesive regions.

3. The windscreen wiper device as set forth in claim 1, further including a pair of end caps (28) joined to opposite longitudinal ends of said carrier and longitudinally spaced from said connecting device.

4. The windscreen wiper device as set forth in claim 1, wherein each of said subspoilers substantially spans the space between said connecting device and one of said end caps.

5. The windscreen wiper device as set forth in claim 1, wherein said adhesive joining said subspoilers with said carrier is a glue.

6. The windscreen wiper device as set forth in claim 1, wherein each of said subspoilers has a base surface and a pair of claws which engage around opposite lateral sides of the carrier.

7. The windscreen wiper device as set forth in claim 6. wherein said base surface is adhesively joined to at least one of said wiper blade and said carrier.

8. The windscreen wiper device as set forth in claim 6, wherein said claws are adhesively joined to said carrier.

9. The windscreen wiper device as set forth in claim 1, wherein said carrier is made of two strips of metal received in side grooves of said wiper blade.

10. The windscreen wiper device as set forth in claim 1, wherein said carrier is made of a single strip of metal which is adhesively joined to the wiper blade.

11. A method of making a windscreen wiper device, comprising the steps of:
preparing a wiper blade (22) of a flexible material for sealing against a windshield to be cleaned;
supporting the wiper blade with an elastic elongated carrier (24) that extends longitudinally and is self-biased into a pre-curved shape;
engaging a connecting device (26) with the carrier, the connecting device being configured for connection with a wiper arm;
adhesively joining a pair of subspoilers (30) which are constructed as separate pieces from one another and from the wiper blade with the carrier on opposite longitudinal sides of the connecting device with an adhesive (36) that is applied along less than a full longitudinal length of each respective subspoiler,
wherein the joining step includes joining each subspoiler to the carrier in at least two adhesive regions which are spaced apart from one another by a non-adhesive region.

12. The method as set forth in claim 11, wherein the joining step includes joining each subspoiler to the carrier in at least three discrete and spaced apart adhesive regions.

13. A windscreen wiper device, comprising:
a longitudinally extending wiper blade (22) of a flexible material for sealing against a windshield of a vehicle;
an elastic, elongated carrier that is self-biased into a pre-curved shape and which extends longitudinally between opposite ends, said carrier operably supporting and biasing said wiper blade into a pre-curved configuration;
a connecting device secured to said carrier for attachment to an oscillating wiper arm;
a pair of subspoilers constructed as separate pieces from one another and from said wiper blade and arranged on longitudinally opposite sides of said connecting device; and
each of said subspoilers being bonded with said carrier along less than a full longitudinal length of the respective subspoiler **characterised in that** the wiper device further comprises end caps (28) engaged with said opposite ends of the carrier (24), and **in that** each of said subspoilers (30) is joined with said carrier in at least two adhesive regions (36) which are spaced apart by a non-adhesive region.

## Patentansprüche

1. Scheibenwischervorrichtung, umfassend:
ein sich längs erstreckendes Wischerblatt (22) aus einem flexiblen Material zum Abdichten gegen eine Windschutzscheibe eines Fahrzeugs;
einen biegsamen, länglichen Träger (24), der in eine vorgekrümmte Form selbstvorgespannt ist und welcher sich längs zwischen gegenüberliegenden Enden erstreckt, wobei der Träger das Wischerblatt operativ in einer vorgekrümmten Konfiguration stützt und vorspannt;
eine Verbindungsvorrichtung (26), die zur Anbindung an einen oszillierenden Wischerarm an dem Träger befestigt ist;
ein Paar Unterspoiler (30), die als separate Teile voneinander und von dem Wischerblatt konstruiert sind und an längs gegenüberliegenden Seiten der Verbindungsvorrichtung angeordnet sind; und
jeder der Unterspoiler ist mit dem Träger entlang weniger als einer gesamten Längslänge des jeweiligen Unterspoilers mit einem Haftmittel (36) verbunden, wobei die Wischervorrichtung **dadurch gekennzeichnet ist, dass** jeder der Unterspoiler mit dem Träger in mindestens zwei Haftbereichen verbunden ist, welche durch einen nicht haftenden Bereich beabstandet sind.

2. Scheibenwischervorrichtung gemäß Anspruch 1, wobei jeder der Unterspoiler mit dem Träger in mindestens drei einzelnen und beabstandeten Haftbereichen verbunden ist.

3. Scheibenwischervorrichtung gemäß Anspruch 1, weiterhin beinhaltend ein Paar Endkappen (28), die mit den gegenüberliegenden Längsenden des Trägers verbunden und von der Verbindungsvorrichtung längs beabstandet sind.

4. Scheibenwischervorrichtung gemäß Anspruch 1, wobei jeder der Unterspoiler im Wesentlichen den Raum zwischen der Verbindungsvorrichtung und einer der Endkappen überspannt.

5. Scheibenwischervorrichtung gemäß Anspruch 1, wobei das Haftmittel, das die Unterspoiler mit dem Träger verbindet, ein Klebstoff ist.

6. Scheibenwischervorrichtung gemäß Anspruch 1, wobei jeder der Unterspoiler eine Basisoberfläche und ein Paar Klauen aufweist, welche um die gegenüberliegenden lateralen Seiten des Trägers herum eingreifen.

7. Scheibenwischervorrichtung gemäß Anspruch 6, wobei die Basisoberfläche anhaftend mit mindestens einem von dem Wischerblatt und dem Träger verbunden ist.

8. Scheibenwischervorrichtung gemäß Anspruch 6, wobei die Klauen anhaftend mit dem Träger verbunden sind.

9. Scheibenwischervorrichtung gemäß Anspruch 1, wobei der Träger aus zwei Streifen aus Metall gefertigt ist, die in Seitennuten des Wischerblatts aufgenommen werden.

10. Scheibenwischervorrichtung gemäß Anspruch 1, wobei der Träger aus einem einzelnen Streifen aus Metall gefertigt ist, der anhaftend mit dem Wischerblatt verbunden ist.

11. Verfahren zur Herstellung einer Scheibenwischervorrichtung, umfassend die Schritte:
Vorbereiten eines Wischerblatts (22) aus einem flexiblen Material zum Abdichten gegen eine zu reinigende Windschutzscheibe;
Stützen des Wischerblatts mit einem biegsamen länglichen Träger (24), der sich längs erstreckt und in eine vorgekrümmte Form selbstvorgespannt ist;
Eingreifen einer Verbindungsvorrichtung (26) mit dem Träger, wobei die Verbindungsvorrichtung für die Verbindung mit einem Wischerarm konfiguriert ist;
Anhaftend Verbinden eines Paares Unterspoiler (30), welche als separate Teile voneinander und von dem Wischerblatt konstruiert sind, mit dem Träger an gegenüberliegenden Längsseiten der Verbindungsvorrichtung, mit einem Haftmittel (36), das entlang weniger als einer gesamten Längslänge jedes jeweiligen Unterspoilers aufgetragen ist, wobei der Verbindungsschritt Verbinden jedes Unterspoilers mit dem Träger in mindestens zwei Haftbereichen beinhaltet, welche durch einen nicht haftenden Bereich voneinander beabstandet sind.

12. Verfahren gemäß Anspruch 11, wobei der Verbindungsschritt Verbinden jedes Unterspoilers mit dem Träger in mindestens drei einzelnen und beabstandeten Haftbereichen beinhaltet.

13. Scheibenwischervorrichtung, umfassend:
ein sich längs erstreckendes Wischerblatt (22) aus einem flexiblen Material zum Abdichten gegen eine Windschutzscheibe eines Fahrzeugs;
einen biegsamen, länglichen Träger, der in eine vorgekrümmte Form selbstvorgespannt ist und welcher sich längs zwischen gegenüberliegenden Enden erstreckt, wobei der Träger das Wischerblatt operativ in einer vorgekrümmten Konfiguration stützt und vorspannt;
eine Verbindungsvorrichtung, die zur Anbindung an einen oszillierenden Wischerarm an dem Träger befestigt ist;
ein Paar Unterspoiler, die als separate Teile voneinander und von dem Wischerblatt konstruiert sind und an längs gegenüberliegenden Seiten der Verbindungsvorrichtung angeordnet sind; und
wobei jeder der Unterspoiler ist mit dem Träger entlang weniger als einer gesamten Längslänge des jeweiligen Unterspoilers verklebt ist, **dadurch gekennzeichnet, dass** die Wischervorrichtung weiterhin Endkappen (28) umfasst, die sich mit den gegenüberliegenden Enden des Trägers (24) in Eingriff befinden, und dass jeder der Unterspoiler (30) mit dem Träger in mindestens zwei Haftbereichen (36) verbunden ist, welche durch einen nicht haftenden Bereich beabstandet sind.

## Revendications

1. Dispositif d'essuie-glace comprenant :
un balai d'essuie-glace (22) s'étendant longitudinalement, réalisé avec un matériau souple pour réaliser l'étanchéité contre un pare-brise d'un véhicule ;
un support (24) élastique allongé qui est auto-sollicité dans une forme pré-incurvée et qui s'étend longitudinalement entre des extrémités opposées, ledit support supportant de manière opérationnelle et sollicitant ledit balai d'essuie-glace dans une configuration pré-incurvée ;
un dispositif de raccordement (26) fixé audit support pour se fixer à un bras d'essuie-glace oscillant ;
une paire de déflecteurs auxiliaires (30) fabriqués comme des pièces séparées l'une de l'autre et dudit balai d'essuie-glace et agencés sur des côtés longitudinalement opposés dudit dispositif de raccordement ; et
chacun desdits déflecteurs auxiliaires étant assemblé avec ledit support le long d'une longueur inférieure à une longueur longitudinale complète du déflecteur auxiliaire respectif avec un adhésif (36),
le dispositif d'essuie-glace étant **caractérisé en ce que** :
chacun desdits déflecteurs auxiliaires est assemblé avec ledit support dans au moins deux régions adhésives qui sont espacées par une région non adhésive.

2. Dispositif d'essuie-glace selon la revendication 1, dans lequel chacun desdits déflecteurs auxiliaires est assemblé avec ledit support dans au moins trois régions adhésives discrètes et espacées.

3. Dispositif d'essuie-glace selon la revendication 1, comprenant en outre une paire de capuchons d'extrémité (28) assemblés aux extrémités longitudinales opposées dudit support et longitudinalement espacés dudit dispositif de raccordement.

4. Dispositif d'essuie-glace selon la revendication 1, dans lequel chacun desdits déflecteurs auxiliaires relie sensiblement l'espace entre ledit dispositif de raccordement et l'un desdits capuchons d'extrémité.

5. Dispositif d'essuie-glace selon la revendication 1, dans lequel ledit adhésif assemblant lesdits déflecteurs auxiliaires avec ledit support est une colle.

6. Dispositif d'essuie-glace selon la revendication 1, dans lequel chacun desdits déflecteurs auxiliaires a une surface de base et une paire de griffes qui se mettent en prise autour des côtés latéraux opposés du support.

7. Dispositif d'essuie-glace selon la revendication 6, dans lequel ladite surface de base est adhésivement assemblée à au moins l'un parmi ledit balai d'essuie-glace et ledit support.

8. Dispositif d'essuie-glace selon la revendication 6, dans lequel lesdites griffes sont assemblées, par voie adhésive, audit support.

9. Dispositif d'essuie-glace selon la revendication 1, dans lequel ledit support est composé de deux bandes de métal reçues dans des rainures latérales dudit balai d'essuie-glace.

10. Dispositif d'essuie-glace selon la revendication 1, dans lequel ledit support est composé d'une seule bande de métal qui est assemblée, par voie adhésive, au balai d'essuie-glace.

11. Procédé pour fabriquer un dispositif d'essuie-glace, comprenant les étapes consistant à :
préparer un balai d'essuie-glace (22) réalisée avec un matériau souple pour réaliser l'étanchéité contre un pare-brise à nettoyer ;
supporter le balai d'essuie-glace avec un support (24) allongé élastique qui s'étend longitudinalement et est auto-sollicité dans une forme pré-incurvée ;
mettre en prise un dispositif de raccordement (26) avec le support, le dispositif de raccordement est configuré pour se raccorder avec un bras d'essuie-glace ;
assembler, par voie adhésive, une paire de déflecteurs auxiliaires (30) qui sont fabriqués comme des pièces séparées l'une de l'autre et du balai d'essuie-glace avec le support sur les côtés longitudinaux opposés du dispositif de raccordement, avec un adhésif (36) qui est appliqué le long d'une longueur inférieure à une longueur longitudinale complète de chaque déflecteur auxiliaire respectif,
dans lequel l'étape d'assemblage comprend l'étape consistant à assembler chaque déflecteur auxiliaire au support dans au moins deux régions adhésives qui sont espacées l'une de l'autre par une région non adhésive.

12. Procédé selon la revendication 11, dans lequel l'étape d'assemblage comprend l'étape consistant à assembler chaque déflecteur auxiliaire au support dans au moins trois régions adhésives discrètes et espacées.

13. Dispositif d'essuie-glace comprenant :
un balai d'essuie-glace (22) s'étendant longitudinalement, réalisé avec un matériau souple pour réaliser l'étanchéité contre un pare-brise d'un véhicule ;
un support élastique, allongé qui est auto-sollicité dans une forme pré-incurvée et qui s'étend longitudinalement entre des extrémités opposées, ledit support supportant, de manière opérationnelle et sollicitant ledit balai d'essuie-glace dans une configuration pré-incurvée ;
un dispositif de raccordement fixé audit support pour se fixer à un bras d'essuie-glace oscillant ;
une paire de déflecteurs auxiliaires fabriqués comme des pièces séparées l'une de l'autre et dudit balai d'essuie-glace et agencés sur les côtés longitudinalement opposés dudit dispositif de raccordement ; et
chacun desdits déflecteurs auxiliaires étant collé avec ledit support sur une longueur inférieure à une longueur longitudinale complète du déflecteur auxiliaire respectif,
**caractérisé en ce que** le dispositif d'essuie-glace comprend en outre des capuchons d'extrémité (28) mis en prise avec lesdites extrémités opposées du support (24), et **en ce que** chacun desdits déflecteurs auxiliaires (30) est assemblé avec ledit support dans au moins deux régions adhésives (36) qui sont espacées par une région non adhésive.
